# EUROPÄISCHE PATENTANMELDUNG

(11) **EP 0 825 091 A2**
(43) Veröffentlichungstag der Anmeldung: **25.02.1998**
(21) Anmeldenummer: 97111373.3
(22) Anmeldetag: 05.07.1997
(51) Int. Cl.: B62D 1/18

(54) **Mehrfach teleskopierbare Lenkwelle**

(30) Priorität: 14.08.1996 DE 29614100 U
(71) Anmelder: Lemförder Metallwaren AG, 49448 Lemförde (DE)
(72) Erfinder: Appelt, Herbert, Dipl.-Ing., 49356 Diepholz (DE); Drapa, Rudolf, 49406 Barnstorf (DE)

(57) **Zusammenfassung**

Die Erfindung betrifft eine mehrfach teleskopierbare Lenkwelle, bestehend aus einem Mantelrohr (1), wenigstens einem Innenrohr (2), einer Innenwelle (3), einer zur Längsachse der Lenkwelle parallel angeordneten Kugelführung (5), beiderseitigen Gelenkverbindungen (6, 7) und Dichtelementen (8) zwischen den teleskopierbaren Bauteilen, wobei die teleskopierbaren Bauteile mit Schutzkappen (9) versehen und die Lenkwelle zumindest bereichsweise in einem Schutzrohr (10) aufgenommen ist.

## Beschreibung

Die Erfindung betrifft eine mehrfach teleskopierbare Lenkwelle nach dem Oberbegriff des Schutzanspruches 1.

Bekannt sind teleskopierbare Lenkwellen in unterschiedlichen konstruktiven Gestaltungen. So können diese ein- oder mehrfach teleskopierbar sein.
Insbesondere für Nutzkraftfahrzeuge (NKW) mit einem kippbaren Fahrerhaus sind mehrfach teleskopierbare Lenkwellen erforderlich. Bei derartigen Kraftfahrzeugen muß zur Wartung, zu Reparaturzwecken oder für Reinigungsarbeiten das Fahrerhaus abgekippt werden, da sich darunter der Motorraum, sowie das Chassis beziehungsweise das Fahrwerk befindet. Die Reinigung erfolgt regelmäßig mit Hochdruckreinigern. Dabei wird Reinigungsflüssigkeit mit extrem hohem Druck beispielsweise zum Abspritzen des Motorblockes verwendet. Eine hinreichende Abdichtung der Lenkwellenbauteile gegen eindringendes Spritzwasser oder eindringende Schmutzteilchen zu erreichen, ist bei dieser Reinigungsmethode schwierig. Bekannt sind Abdichtungen in Form von Dichtungsbälgen.
Aus DE 36 01 044 A1 geht beispielsweise eine Abdichtung einer Lenkeinrichtung hervor, die mittels einer in das Bodenblech des Kraftfahrzeuges eingeknöpften Dichtstulpe sowohl das Eindringen von Verunreinigungen in den Fahrgastraum, als auch den Schutz der innerhalb der Dichtstulpe liegenden Lenkwellenteile ermöglicht.

Die Verwendung eines Dichtungsbalges wird jedoch bei mehrfach teleskopierbaren Lenkwellen problematisch, da aufgrund der extremen Länge der vollständig teleskopierten Lenkwelle, Dichtungsbälge verwendet werden müßten, deren Länge häufig nicht realisierbar ist. Im unteleskopierten Zustand der Lenksäule würden derartige Dichtungsbälge einen hohen Platzbedarfbenötigen.
Ferner wird durch die zurückzulegenden Wege des Dichtungsbalges während des Teleskopiervorganges das Elastomermaterial hoch beansprucht und unterliegt demzufolge auch einem erhöhten Verschleiß. Dies wiederum birgt die Gefahr von Zerstörungen des Dichtungsbalges in sich, sodaß Verunreinigungen auch bis in die Lenkwellenteile vordringen können, was letztlich zu einer Beschädigung dieses Sicherheitsbauteiles führt.
Nachteilig ist bei der Verwendung von Dichtungsbälgen darüber hinaus, daß die Teleskopierbarkeit der Lenkwellenteile durch den Widerstand des Dichtungsbalges beeinträchtigt wird.
Zudem können Dichtungsbälge ohne erhebliche zusätzliche konstruktive Maßnahmen, bei Hochdruckreinigungsverfahren keine ausreichend sichere Dichtfunktion ausüben.

Andere Lösungen zum Schutz der zu teleskopierenden Lenkwellenteile sehen Wellendichtungen vor.
Aus DE 41 19 451 A1 ist beispielsweise ein in einen Überwurf eingelegter Dichtungsring bekannt. Dieser Überwurf hintergreift elastisch eine in das Mantelrohr eingearbeitete, umlaufende Nut, wobei der Dichtungsring während des Teleskopiervorganges auf dem Wellenteil verschoben wird. Dies macht infolge der Reibung zwischen Wellenteil und Dichtungsring einen Kraftaufwand zur Verschiebung erforderlich, der unerwünscht ist. Lenkwellen moderner Bauart sollen leichtgängig verschiebbar sein. Die durch den Dichtungsring verursachte Reibung schmälert die Wirkung der in DE 41 19 451 A1 dargestellten, an sich sehr vorteilhaften, Kugelumlaufführung.

Es ist Aufgabe der Erfindung, eine mehrfach teleskopierbare Lenkwelle zu entwickeln, die leichtgängig teleskopierbar ist und bei der die Wellenteile gegeneinander derart abgedichtet sind, daß selbst bei Hochdruckreinigung im teleskopierten Zustand keine Verunreinigungen in das Innere der Lenkwelle eindringen können.

Gelöst wird diese Aufgabenstellung mit den kennzeichnenden Merkmalen des Schutzanspruches 1. Ausgestaltungen der Erfindung sind Gegenstand der Unteransprüche.

Eine erfindungsgemäße Lenkwelle besteht bei zweifach teleskopierbaren Lenkwellen aus einem Mantelrohr und einem Innenrohr. Bei mehrfach teleskopierbaren Lenkwellen werden mehrere Innenrohre ineinander gesetzt. Diese sind ineinander teleskopierbar. In dem innersten Innenrohr ist eine Innenwelle über eine achsparallele Keilverzahnung drehfest und axial beweglich gerührt. An Stelle der Keilverzahnung ist ebenso eine Evolventenverzahnung verwendbar und liegt im Bereich des Erfindungsgedankens. Die Keilverzahnung sollte in an sich bekannter Weise mit einem Kunststoffüberzug versehen sein, um eine leichtgängige Führung zu gewährleisten und gleichzeitig die Relativbewegungen in radialer Richtung zwischen Innenwelle und Innenrohr zu reduzieren. In dem Mantelrohr ist ebenfalls eine an sich bekannte Kugelführung zwischen Mantelrohr und Innenwelle eingesetzt, die eine annähernd reibungslose Teleskopfunktion ermöglicht. Die Kugelführung kann auch aus einem Kugelumlauf bestehen, oder mit diesem kombiniert sein. In dieser Ausrührung ist eine teleskopierbare Lenkwelle sehr leichtgängig, da die Reibungsverluste vernachlässigbar gering sind.
Einerseits ist an dem Mantelrohr und andererseits an der Innenwelle je eine Gelenkverbindung angebracht, die zur Anbindung der Lenkwelle an das Lenkgetriebe beziehungsweise zur Anbindung an die Lenksäule dient.
Erfindungsgemäß ist jeder Übergang zweier teleskopierender Teile mit einer Schutzkappe versehen.
Dabei sind unterschiedliche Schutzkappen verwendbar So sollte vorteilhafter Weise die Schutzkappe zwischen Innenwelle und erstem Innenrohr auf dem Innenrohr aufgesetzt sein und an der Innenwelle anliegen. Um die Dichtwirkung zu verstärken, kann zwischen Innenrohr und Innenwelle in eine Lagerbuchse zusätzlich ein Dichtring eingelegt werden. Dieser Dichtring muß jedoch nicht die Parameter bisher bekannter Ausführungen erfüllen, er ist eher als eine Art Abstreifring anzusehen, sodaß hier eine geringe Reibung entsteht.
Die Schutzkappen zwischen den Innenrohren sind auf dem jeweiligen äußeren Rohr aufgesetzt und weisen endseitig eine konusförmige Öffnung auf, sodaß sie beim Ineinanderschieben der Teleskopteile selbstständig wieder ihre Position einnehmen.
Sinnvoll sind hierbei auch Durchmesserreduzierungen der Schutzkappen. Durch eine derartige Gestaltung zentrieren sich die Schutzkappen selbstständig.
Die Lenkwelle wird erfindungsgemäß zu einem überwiegenden Teil von einem Schutzrohr aufgenommen, das endseitig ebenfalls eine leicht konische Öffnung aufweisen kann und nur einseitig an der Lenkwelle befestigt wird. Um zu vermeiden, daß sich im Innern des Schutzrohres Reinigungsflüssigkeit oder Kondensat ansammelt, ist es vorteilhaft, auf der Seite, auf der das Schutzrohr mit der Lenkwelle verbunden ist, Abflussöffhungen in das Schutzrohr einzubringen.
Die Schutzkappe, die auf dem Mantelrohr montiert ist, weist erfindungsgemäß an ihrem Außenumfang eine bereichsweise profilierte Oberfläche auf. Diese Profilierung könnte eine einfache, umlaufende Rillenkontur sein. Diese Profilierung ist erforderlich, um dem Schutzrohr eine Führung zu geben. Es ist ferner von Vorteil, zusätzliche Abstreifelemente auf die Schutzkappe aufzubringen. Je nach der erforderlichen Länge des Schutzrohres ist es vorteilhaft, auf dem Mantelrohr zusätzlich einen Lagerring vorzusehen, der ebenso wie die Profilierung des Außenumfanges der Schutzkappe zur Unterstützung der Führung des Schutzrohres dient.

Ein spezielles Ausführungsbeispiel der Erfindung wird nachstehend unter Bezugnahme auf die Zeichnung näher erläutert. Es zeigt:

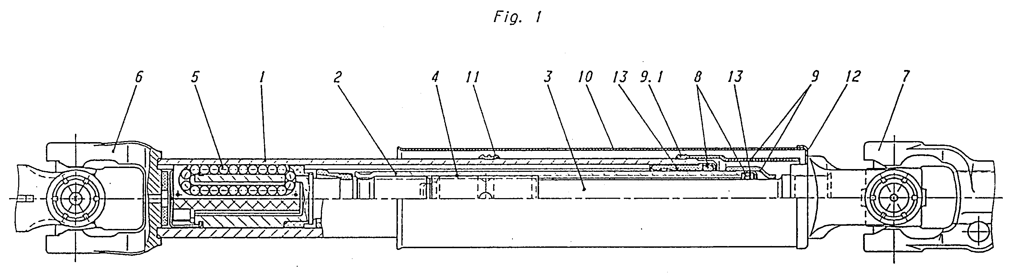

**Figur 1**: die Darstellung einer erfindungsgemäßen Lenkwelle im Schnitt

In Figur 1 ist eine erfindungsgemäße zweifach teleskopierbare Lenkwelle bestehend aus einem Mantelrohr (1) und einem Innenrohr (2) dargestellt. In dem Innenrohr ist eine Innenwelle (3) über eine achsparallele Keilverzahnung (4) drehfest und axial beweglich geführt. Die Keilverzahnung ist in an sich bekannter Weise mit einem Kunststoffüberzug versehen, um eine leichtgängige Führung zu gewährleisten und gleichzeitig die Relativbewegungen in radialer Richtung zwischen Innenwelle und Innenrohr zu reduzieren. In dem Mantelrohr ist ebenfalls eine an sich bekannte Kugelführung (5) zwischen Mantelrohr und Innenwelle eingesetzt, die eine annähernd reibungslose Teleskopfunktion ermöglicht. Die Kugelführung besteht in dem Ausführungsbeispiel der Figur 1 aus einem Kugelumlauf In dieser Ausführung ist eine teleskopierbare Lenkwelle sehr leichtgängig, da die Reibungsverluste vernachlässigbar gering sind.
Einerseits ist an dem Mantelrohr (1) und andererseits an der Innenwelle (3) je eine Gelenkverbindung (6, 7) angebracht, die zur Anbindung der Lenkwelle an das Lenkgetriebe beziehungsweise zur Anbindung an die Lenksäule dient.
An den Übergängen zwischen zwei teleskopierenden Teilen ist jeweils eine Schutzkappe aufgesetzt.
Die Schutzkappen sind unterschiedlich ausgeführt. So ist die Schutzkappe (9) zwischen Innenwelle (3) und Innenrohr (2) auf dem Innenrohr (2) aufgesetzt und liegt an der Innenwelle (3) an. Um die Dichtwirkung zu verstärken, ist in einer Lagerbuchse (13) des Innenrohres (2) ein Dichtelement (8) eingesetzt. Dieses Dichtelement (8) ist hierbei ein Dichtring, der als eine Art Abstreifring anzusehen ist, sodaß hier nur eine geringe Reibung zwischen den teleskopierenden Teilen der Lenkwelle entsteht.
Die Schutzkappe (9) zwischen dem Mantelrohr (1) und dem Innenrohr (2) weist endseitig eine konusförmige Öffnung auf sodaß sie beim Ineinanderschieben der Teleskopteile selbstständig wieder ihre Position einnimmt. Ferner sind die Schutzkappen mit einer Durchmesserreduzierung versehen. Durch eine derartige Gestaltungen zentrieren sich die Schutzkappen selbstständig. Auch in der Lagerbuchse (13) des Mantelrohres (1) ist ein Dichtelement (8) in Form eines Dichtringes eingelegt.
Die Lenkwelle wird erfindungsgemäß zu einem überwiegenden Teil von einem Schutzrohr (10) aufgenommen, das endseitig ebenfalls eine leicht konische Öffnung aufweist und nur einseitig an der Lenkwelle befestigt wird. Um zu vermeiden, daß sich im Innern des Schutzrohres Reinigungsflüssigkeit ansammelt, ist es angebracht, auf der Seite, auf der das Schutzrohr mit der Lenkwelle verbunden ist, Abflussbohrungen (12) in das Schutzrohr einzubringen.

Die Schutzkappe (9), die auf dem Mantelrohr (1) montiert ist, weist erfindungsgemäß an ihrem Außenumfang eine bereichsweise profilierte Oberfläche (9.1) auf. Diese Profilierung ist in der dargestellten Ausführung einer erfindungsgemäßen teleskopierbaren Lenklwelle eine einfache, umlaufende Rillenkontur. Die Profilierung ist erforderlich, um dem Schutzrohr (10) eine Führung zu geben. Auf dem Mantelrohr (1) ist zusätzlich ein Lagerring (11) aufgesetzt, der ebenso wie die Profilierung des Außenumfanges der Schutzkappe zur Unterstützung der Führung des Schutzrohres (10) dient.

Bei Reinigungsarbeiten mittels Hochdruckreinigung kann der Sprühnebel zwar einseitig in das Schutzrohr (10) eindringen, dieser baut jedoch über die Länge des Schutzrohres seinen Druck teilweise ab. Unterstützend wirken für den Druckabbau der Lagerring (11) und die profilierte Oberfläche (9.1) der Schutzkappe (9) auf dem Mantelrohr (1), weil sich die Druckwellen daran brechen und teilweise auch reflektiert werden, sodaß sie die nachfolgenden Druckwellen abschwächen. Somit reichen die einfachen Schutzkappen (9) zur Abdichtung der teleskopierenden Lenkwellenteile aus.
Um eine zusätzliche Sicherheit zu schaffen, können in die ohnehin für die Lagerung erforderlichen Lagerbuchsen (13) in an sich bekannter Weise Dichtelemente (8) einfachster Bauart eingelegt werden. Derartige Dichtelemente erhöhen die Reibung zwischen den Lenkwellenteilen vernachlässigbar wenig, sodaß hier eine teleskopierbare Lenkwelle vorliegt, die leichtgängig und trotzdem rundum gegen das Eindringen von Reinigungsflüssigkeit geschützt ist.

### Bezugszeichenliste:

- 1: Mantelrohr
- 2: Innenrohr
- 3: Innenwelle
- 4: Keilverzahnung
- 5: Kugelführung
- 6: Gelenkverbindung
- 7: Gelenkverbindung
- 8: Dichtelement
- 9: Schutzkappe
- 9.1: profilierte Oberfläche
- 10: Schutzrohr
- 11: Lagerring
- 12: Abflussbohrung
- 13: Lagerbuchse

## Patentansprüche

1. Mehrfach teleskopierbare Lenkwelle, bestehend aus:
- einem Mantelrohr (1),
- wenigstens einem Innenrohr (2),
- einer Innenwelle (3), deren Verbindung zu dem Innenrohr aus einer achsparallelen Verzahnung (4) zur Längsführung der Innenwelle in dem Innenrohr besteht,
- einer zur Längsachse der Lenkwelle parallel angeordneten Kugelführung (5), die das Mantelrohr und die Innenwelle drehfest und axialverschieblich miteinander verbindet,
- beiderseitigen Gelenkverbindungen (6, 7) zur Anbindung an das Lenkgetriebe und die Lenksäule und Dichtelementen (8) zwischen den teleskopierbaren Bauteilen,
dadurch gekennzeichnet, daß
die teleskopierbaren Bauteile mit Schutzkappen (9) versehen und die Lenkwelle zumindest bereichsweise in einem Schutzrohr (10) aufgenommen ist.

2. Mehrfach teleskopierbare Lenkwelle nach Anspruch 1,
dadurch gekennzeichnet, daß
die zentrierten Schutzkappen (9) mit einer endseitigen, konusförmigen Öffnung und wenigstens einer Durchmessererweiterung versehen sind.

3. Mehrfach teleskopierbare Lenkwelle nach einem der Ansprüche 1 bis 2,
dadurch gekennzeichnet, daß
die Schutzkappen (9) an ihrem Außenumfang eine profilierte Oberfläche (9.1) aufweisen.

4. Mehrfach teleskopierbare Lenkwelle nach einem oder mehreren der Ansprüche 1 bis 3,
dadurch gekennzeichnet, daß
innerhalb des Bereiches, den das Schutzrohr (10) permanent überdeckt, ein Lagerring (11) auf das Mantelrohr (1) aufgesetzt ist.

5. Mehrfach teleskopierbare Lenkwelle nach einem oder mehreren der Ansprüche 1 bis 4,
dadurch gekennzeichnet, daß
wenigstens eine Abflussbohrung (12) im Boden des Schutzrohres (10) eingebracht ist.

6. Mehrfach teleskopierbare Lenkwelle nach einem oder mehreren der Ansprüche 1 bis 5,
dadurch gekennzeichnet, daß
das Schutzrohr (10) und die Schutzkappen (9) aus Kunststoffen bestehen.

7. Mehrfach teleskopierbare Lenkwelle nach einem oder mehreren der Ansprüche 1 bis 5,
dadurch gekennzeichnet, daß
das Schutzrohr (10) und die Schutzkappen (9) aus Metall bestehen.
